(19) Europäisches Patentamt
European Patent Office
Office européen des brevets

(11) **EP 3 989 262 A1**

(12) **EUROPEAN PATENT APPLICATION**

(43) Date of publication:
**27.04.2022 Bulletin 2022/17**

(21) Application number: **20203608.3**

(22) Date of filing: **23.10.2020**

(51) International Patent Classification (IPC):
*H01J 49/42* *(2006.01)*      *B23H 9/00* *(2006.01)*

(52) Cooperative Patent Classification (CPC):
**H01J 49/422; H01J 49/424; H01J 49/4255;**
**B23H 9/00**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Alpine Quantum Technologies GmbH**
**6020 Innsbruck (AT)**

(72) Inventors:
• **JACOB, Georg**
**6020 Innsbruck (AT)**
• **MONZ, Thomas**
**6103 Reith b. Seefeld (AT)**
• **TSCHIGG, Andreas**
**6071 Aldrans (AT)**

(74) Representative: **Grünecker Patent- und**
**Rechtsanwälte**
**PartG mbB**
**Leopoldstraße 4**
**80802 München (DE)**

(54) **METHOD FOR ION TRAP MANUFACTURING**

(57)     The present disclosure provides embodiments for manufacturing ion traps. More specifically, individual components of the ion trap are assembled into an assembled structure. For instance, electrodes of the ion trap may be mounted to a mount of the ion trap. Functional surfaces (e.g., electrodes) of the ion trap are then processed on the assembled structure.

Fig. 4

**EP 3 989 262 A1**

**Description**

TECHNICAL FIELD

Embodiments of the present invention relate to the field of manufacturing an ion trap.

BACKGROUND

Ion traps, such as a Paul or Penning trap, generate an electric field which is used to trap ions. Usually, the electric field is generated from electrically charged metal electrodes. Typical applications, which include, e.g., in mass spectrometry, optical clocks, or even quantum computers, require very accurate and precise ion traps. Thus, an electric field of precisely the desired configuration has to be generated. Accordingly, the trap, and in particular the electrodes, have to be manufactured as accurately as possible.

SUMMARY

The present invention is defined by the independent claims. Some of the advantageous embodiments are subject matter to the dependent claims.

In some embodiments of the invention, a method is provided for manufacturing an ion trap, in which the assembled structure of an ion trap is processed/machined in a final step. This may avoid or reduce the problem of error accumulation caused by the assembly of individually produced components of the ion trap.

According to an embodiment, a method for manufacturing an ion trap is provided. The method includes a step of assembling the ion trap by mounting electrodes of the ion trap to a mount of the ion trap. The method further includes a step of processing surfaces of the electrodes in the assembled ion trap.

In an exemplary implementation, the processing of the surfaces includes a step of removing excess material of the surfaces. It may be easier to remove excess material than to add material to the electrodes in the assembled structure, which may allow to achieve smaller deviations from the desired electrode structure.

In the processing of the surfaces, the surfaces are, for example, processed so as to increase a symmetry of an electrical field of the ion trap. Increasing the symmetry of the electrical field generated by the ion trap may increase the performance of the ion trap.

In an exemplary implementation, the removing of excess material includes a step of electrical discharge machining of the surfaces. Using electrical discharge machining for removing excess material of the surfaces may allow to remove said excess material with high precision.

The ion trap is, for example, a Paul Trap, a three dimensional, 3D, ion trap, and/or a linear 3D trap.

In an exemplary implementation, the method for manufacturing an ion trap further comprises a step of electro-polishing the processed surfaces of the mounted electrodes, plasma-polishing the processed surfaces of the mounted electrodes, and/or coating the processed surfaces of the mounted electrodes. Performing electro-polishing/plasma-polishing/coating at the assembled structure may further increase the performance of the ion trap by avoiding the risk of introducing new deviations from the desired electrode structure when disassembling and reassembling the ion trap.

The electrodes are, for example, made of titanium, copper, gold, stainless steel, and/or aluminum. Using titanium, copper, gold, stainless steel, and/or aluminum as material for the electrodes may increase the performance of the ion trap.

The mount is, for example, made of an insulating material, such as sapphire, ceramics, aluminum-oxide, glass-ceramic, and/or diamond. Using sapphire, ceramics, aluminum-oxide, glass-ceramic, and/or diamond as material for the mount may increase the performance of the ion trap.

In an exemplary implementation, the coefficient of thermal expansion of the material of the electrodes is substantially similar to the coefficient of thermal expansion of the material of the mount. A substantially similar coefficient of thermal expansion may prevent or, at least, reduce tension/stress and thus deformation of the electrode structure.

In an exemplary implementation, the ion trap includes electrodes which, when connected to an alternating power source, generate an alternating multipole electrical field.

For example, the electrodes are mounted to an inner side of the mount, and, on an outer side of the mount, there is, for each of the mounted electrodes, a means for electrically connecting the mounted electrode to a voltage. This may allow to easily apply a voltage to the electrodes of the fully assembled ion trap.

In an exemplary implementation, the means for electrically connecting the mounted electrodes are used to mount the electrodes to the mount. This may simplify the structure and construction of the ion trap.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments of the invention are described in more detail with reference to the attached figures and drawings, in which:

Fig. 1a    is a schematic drawing illustrating a first exemplary ion trap (without endcaps) suitable for generating an electrical quadrupole field;

Fig. 1b    is a schematic drawing illustrating a cross section of the first exemplary ion trap (without endcaps), shown in Fig. 1a;

Fig. 2a is a schematic drawing illustrating 3-dimensional view of a second exemplary ion trap (without endcaps) suitable for generating an electrical quadrupole field;

Fig. 2b is a schematic drawing illustrating a first cross section of the second exemplary ion trap (without endcaps), shown in Fig. 2a;

Fig. 2c is a schematic drawing illustrating the second exemplary ion trap (without endcaps), shown in Fig. 2a;

Fig. 2d is a schematic drawing illustrating a second cross section of the second exemplary ion trap (without endcaps), shown in Fig. 2a;

Fig. 3 is a two-dimensional graph illustrating an exemplary electrical quadrupole field; and

Fig. 4 is a flow diagram illustrating exemplary steps performed according to an embodiment.

In the following, identical reference signs refer to identical or at least functionally equivalent features.

In general, identical reference signs refer to identical or at least functionally equivalent features.

DETAILED DESCRIPTION

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

It is understood that the features of the various exemplary embodiments and/or aspects described herein may be combined with each other, unless specifically noted otherwise.

In the following, the term *"ion trap"* refers to any device employable to trap ions, using electric and/or magnetic field, ions. For instance, an ion trap may be a Penning trap; a Paul trap; a three dimensional, 3D, ion trap; and/or a linear 3D trap. In this disclosure, the term ion trap refers to an assembly with a plurality of electrodes which, when driven, generate an electric field that limits (traps) the freedom of movement of ions so that they may not escape a particular (preferably small) region in the vicinity of those electrodes. It is noted that the actual ion trap device/system may include further mechanical and electrical components such as fixing means, electrical contacts, housing, power source, control circuitry, means to cool ions or the like.

Here, the term *"3D trap"* refers to all traps which are not surface traps. Surface traps are traps where all electrodes are located in a same plane. In particular, a 3D trap may be a Penning or a Paul trap. Usually, 3D ion traps have a rotational symmetry, e.g., a discrete cylindrical symmetry or a continuous cylindrical symmetry.

Henceforth, without loss of generality, the symmetry axis of such a cylindrical symmetry is assumed to be parallel to the z-axis of a Cartesian coordinate system in which the axes are represented by three mutually orthogonal unit vectors $\hat{e}_x$, $\hat{e}_y$, and $\hat{e}_z$. In this context, the symmetry axis is also referred to as the *"axial direction"*,

$$\hat{r}(x, y) = (x\hat{e}_x + y\hat{e}_y)/\sqrt{x^2 + y^2}$$

and as the *"radial direction"* (at the point $(x, y, 0) = x\hat{e}_x + y\hat{e}_y$). It is further noted that the symmetry axis may also be the axis along which multiple trapped ions typically align.

The term *"Penning trap"* refers to a trap that uses static electric and static magnetic fields to trap the ions. Usually, in a Penning trap solely static electric fields are used. In other words, usually no oscillating and/or alternating fields are used. For instance, to confine charged particles radially, a static magnetic field $B = B_z\hat{e}_z$ in the axial direction may be used. The magnetic field $\vec{B}$ forces the charged particles to perform circular motion with angular frequency $\omega = |B_z| \cdot q/m$, where $q$ and $m$ are respectively charge and mass of the charged particles.

Furthermore, in order to confine the charged particles axially, a static electric quadrupole potential $V(z, r) = V_0(z^2 - r^2/2)$ may be used.

The term *"Paul trap"* refers to a trap that uses electric fields to trap the ions. Usually, in a Paul trap, only electric fields are used to trap the ions. In particular, usually no magnetic fields are used. In general, at least one of the electric fields of a Paul trap is alternating (e.g., oscillating), and a Paul trap may use both static as well as alternating electric fields. For example, the alternating field of a Paul trap may be an alternating electric multipole field, in particular, an electric quadrupole field. Since the switching of the voltage is often at radio frequency, these traps are also called Radio Frequency (RF) traps.

A **linear 3D trap** is a particular type of a 3D trap. Usually, in a linear 3D trap, the ions are confined radially using an alternating (AC) electric field and confined axially by static (DC) electric potentials. Accordingly, a linear Paul trap is in general also a (linear) Paul trap.

A simple example of a linear Paul trap is the conventional four-rod trap, where four rods (four long cylindrical electrodes) are arranged mutually parallel in a rectangular configuration. Two diagonally-opposed (in that rectangle) electrodes may be grounded, whereas the other two electrodes may be driven by a RF potential, which generates a quadrupole electric fields. To confine the ions axially, a static potential may be applied at end caps. Instead of four cylindrical electrodes, frequently, hyperbolic shaped electrodes are used. In general, an ion trap (e.g. a Paul trap) may also have less or more than four electrodes. For instance, Ring traps, which are another conventional type of Paul traps, usually have three electrodes. Furthermore, a linear Paul trap that generates a multipole field of a higher order than a quadrupole field, may have more than four electrodes.

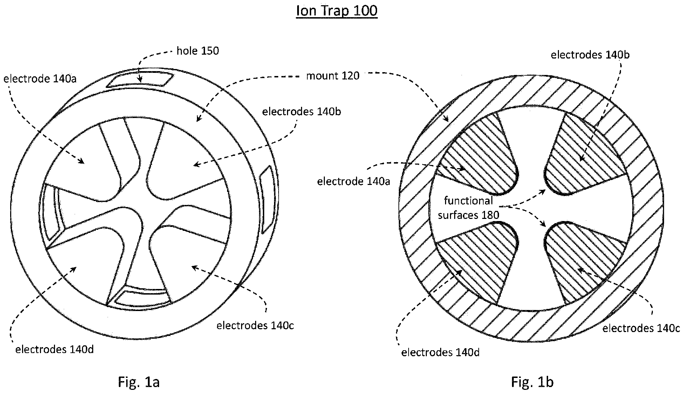

Another example of a linear ion trap is shown in Figs. 1a and 1b. More specifically, Fig. 1a is a 3-dimensional schematic drawing of the ion trap 100, which has a mount 120, four electrodes 140a to 140d, functional surfaces 180, and four holes 150 to allow for optical access. The ion trap 100 has a discrete rotational symmetry. More specifically, a rotation by an angle of 90° with respect to the symmetry axis does not change the geometry of the ion trap 100. Fig. **1b** further shows a cross section of the ion trap 100 obtained using a cutting plane perpendicular to the axial direction.

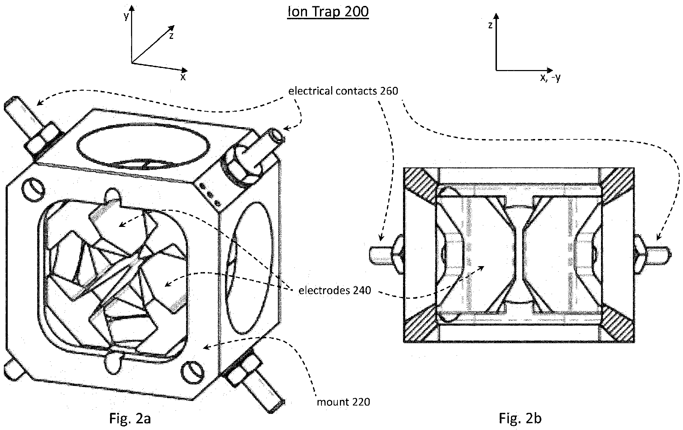

Another example of a linear ion trap is shown in Figs. 2a to 2d. More specifically, Fig. 2a is a 3-dimensional schematic drawing of the ion trap 200. As shown therein, the ion trap 200 has a mount 220, four electrodes 240, four electrical contacts 260, and functional surfaces 280. The ion trap 200 has the same discrete rotational symmetry as the ion trap 100.

It is noted that ion traps 100 and 200 only generate an alternating electric quadrupole field for trapping ions radially. Additional axial confinement may be achieved using static electric potentials generated, for instance, by means of endcaps. For the sake of simplicity and, in particular, to avoid obscuring the view of the center of the trap, such endcaps are not explicitly shown in Figs. 1a, 1b, and 2a to 2d.

It is further noted that, some or all of the electrodes may be segmented.

In the following, it is referred to x-, y-, and z-direction as indicated above with reference to Fig. 2a. In particular, the symmetry axis is parallel to the z-direction and goes through the center (with respect to the x- and y-direction) of the trap. Furthermore, trapped ions may align in sequence in z-direction and, in particular, on the symmetry axis.

Fig. 2b is a cross section of the ion trap 200. The cross section of Fig. 2b may be obtained using a cutting plane that includes the symmetry axis and is either perpendicular to the x-direction or perpendicular to the y-direction. In other words, the cutting plane is parallel to either the xz-plane or the yz-plane. Correspondingly, as indicated above Fig. 2b, the vertical direction (from bottom to top) of Fig. 2b corresponds to the z-direction, whereas the horizontal direction (from left to right) of Fig. 2b corresponds to either the x- or the minus y-direction.

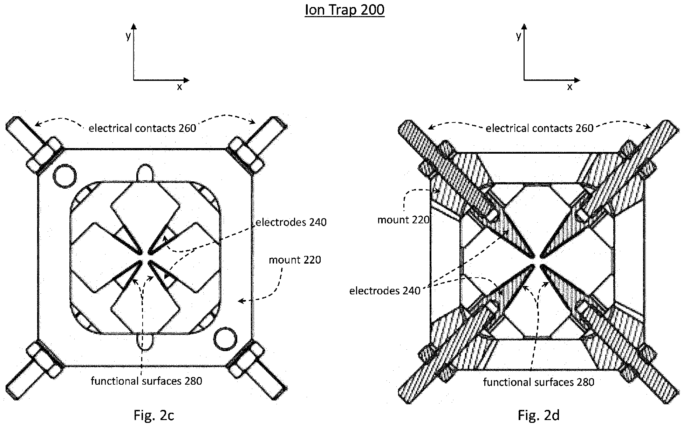

**Fig. 2c** is a 2-dimensional schematic drawing of the ion trap 200. More specifically, Fig. 2c shows the ion trap 200 when viewed in the z-direction. Correspondingly, the vertical direction of Fig. 2c corresponds to the y-direction, whereas the horizontal direction of Fig. 2c corresponds to the x-direction.

Fig. 2d is another cross section of the ion trap 200. The cross section of Fig. 2d may be obtained using a cutting plane that is perpendicular to the z-direction. In other words, the cutting plane is parallel to the xy-plane. Correspondingly, as indicated above Fig. 2d, the vertical direction of Fig. 2d may correspond to the y-direction, whereas the horizontal direction of Fig. 2d may correspond to the x-direction.

In general, the electrodes of an ion trap may be mounted to an inner side of the **mount.** For instance, the electrodes 140 are mounted to an inner side mount 120, and the electrodes 240 are mounted to an inner side of mount 240. Here, the term *"mount'* refers any physical structure that holds (fixes) the electrodes with respect to each other in place.

In general, the electrodes are made of electrically conductive material(s). For instance, the electrodes may be made of titanium, copper, gold, stainless steel, aluminum, or some alloys. In general, some advantageous feature of the material(s) for producing the electrodes include one or more of the following: high electrical and/or thermal conductivity (low resistance), high chemical stability e.g. regarding corrosion or the like, high physical stability, e.g. tensile strength to maintain form, high damping capacity, thermal stability (low coefficient of thermal expansion), that the material is non-magnetic, and/or a high vacuum compatibility of the material. Furthermore, if using dielectric materials, it may be important that the loss tangent is small.

For example, titanium, which is non-magnetic and has a reasonable thermal and electrical conductivity, may be used as material for the electrodes. The conductivity of titanium may be improved by providing e.g. a gold or copper coating.

Furthermore, the electrodes may have to be mutually insulated. For this reason, the structure that holds the electrodes in place (e.g., the mount 120, 220) may be insulating. Accordingly, the mount may be made of an insulating material. For instance the mount may be made of sapphire, ceramics, aluminum-oxide, glass-ceramic, and/or diamond. These materials are mechanically and thermally rather stable and hard, so that the electrodes can be held in place reliably, to generate the desired electric field. They are good insulators. However, it is noted that the mount may not be completely made of insulating material(s). For instance, it may be sufficient, to use insulating material(s) for the contact surfaces of the mount with the electrodes and/or to use insulating material(s) for the parts of the mount that are in contact with the electrodes.

For example, sapphire may be used as material for the mount: sapphire has a small RF loss tangent, a high vacuum-compatibility, a small dielectric constant, high thermal conductivity, a high breakdown voltage, and is machineable.

Furthermore, it may be advantageous to use a combination of materials with the same, or at least a substantially similar, coefficient of thermal expansion. In particular, the electrically conductive material(s), used for the electrodes, and the insulating material(s), used for the mount, may have a substantially similar coefficient of thermal expansion. In other words, the coefficient of thermal expansion of a material of the electrodes is substantially similar to a coefficient of thermal expansion of a material of the mount. For instance, substantially similar coefficients of thermal expansion may be coefficients that differ by less than $2 \times 10^{-6}/C°$ at 20C°. Substantially similar coefficients of thermal expansion may prevent or, at least, reduce tension/stress, due to temperature changes. This, in turn, may reduce/prevent deformations of the electrodes structure, in particular, when adjusting the temperature of the ion trap over a large range. In other words, substantially similar coefficients may increase the mechanical stability over a large (e.g. over a range of $\pm 300C°$) temperature range.

For instance, in order to increase performance and stability of the ion trap, the vacuum conditions when operating the trap may be improved by annealing/baking the fully assembled trap to 180°C under vacuum. This may also help to remove, in particular organic residue on the trap surfaces. Alternatively, an ion trap maybe cooled, e.g., in a cryogenic setup, down to a temperature of ca. 4K.

For example, the combination titanium/sapphire may be used: titanium and sapphire have a substantially similar coefficient of thermal expansion, and, as explained above, are suitable materials for electrodes and mount, respectively.

Furthermore, an ion trap may in general have means for electrically connecting the electrodes to respective voltages. In particular, there may be, for each of the mounted electrodes, a means for electrically connecting said mounted electrode to a voltage. For example, said means may be electrical contacts. Such electrical contacts may be on an outer side of the mount so that can be accessed more easily and the impact onto the electric field generated by the trap is reduced/suppressed.

For instance, on the outer side of mount 220, there are four electrical contacts 260. Each of the electrical contacts 260 may be for connecting a respective one of the four electrodes 260 to a voltage. However, the present invention is not limited thereto. That is, in general, there may be a one-to-one corresponds between means for electrically connecting the electrodes and electrodes. However, the present invention is not limited thereto as in general there may be one means for electrically connecting multiple, in particular opposite, electrodes.

When appropriate voltages are applied to the electrodes (e.g., using the means 260 for electrically connecting the electrodes 140, 240), the ion trap (in particular, the electrodes) may generate an electric field that may be used to trap ions. For instance, an electric multipole field, in particular an electric quadrupole field, may be generated. Usually, the same voltage (including grounded) is applied to opposite electrodes, which are electrodes related by a 180° rotation around the symmetry axis. Furthermore, when appropriate alternating voltages are applied to the electrodes, the ion trap may generate an alternating electric field that may be used to trap ions. In particular, when connected to an alternating power source, the electrodes may generate an alternating multipole electrical field.

For instance, when applying a voltage (or power) to the electrodes of ion trap 100 or ion trap 200, the respective trap may generate an electric quadrupole field. Furthermore, if an alternating power is applied to the electrodes, the respective trap 100, 200 may generate an alternating quadrupole field. For instance, an alternating power may be applied to two opposing electrodes (e.g., to electrodes 140a and 140c), whereas the other two electrodes (e.g., electrodes 140b and 140d) may be grounded.

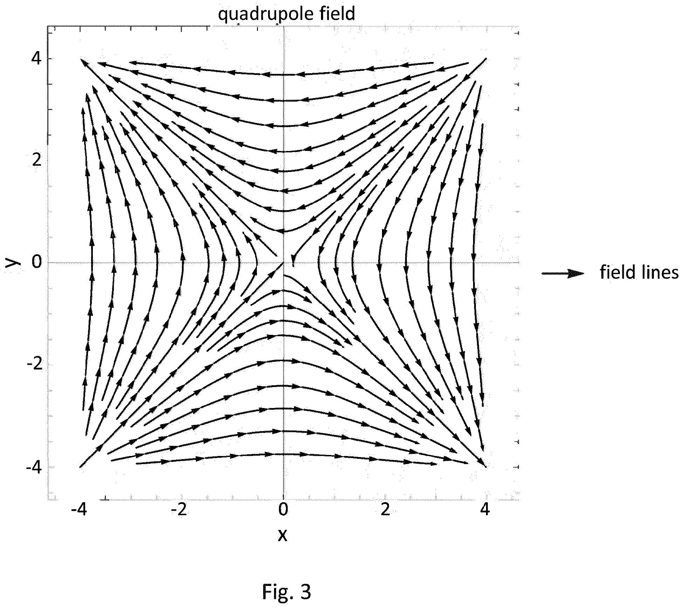

An exemplary quadrupole field that may, e.g., be generated by ion trap 100 or 200 is illustrated in Fig. 3. It is noted that the strength of the electrical field generated by an ion trap may essentially be proportional to the applied voltage. Accordingly, by applying an alternating power rather than a constant voltage/power, an alternating electrical field may be obtained. In Fig. 3, this would correspond to a change of the strength of the field in correspondence with the applied voltage, and eventually a flip of the direction of the field lines when the voltage changes its sign.

The precise configuration (e.g., the spatial symmetry) of the field(s) used to trap the ions may be of crucial importance for the performance of the trap. As these fields are usually generated by the electrodes, the exact configuration of the electrode structure and, in particular, the electrode surfaces may be important.

The performance of the trap may for instance by a precise control of the position of ions and/or the capability to keep the ions trapped for a long period of time. For instance, it may be desired that the electric field keeps trapped ions at (or oscillating around) particular positions, e.g., at positions in the middle of the trap, possibly with a substantially same distance from all electrodes (e.g. from the four electrodes 140a to 140d, or from the four electrodes 240). The ions may then be arranged in a line following the z-direction in the figures.

Here, the term *"configuration of the electrode structure"* may refer to the dimensions (e.g., form and/or shape) of the individual electrodes, in particular, of the functional surfaces of the electrodes. Said term may also refer to the arrangement of the (assembled) electrodes with respect to each other.

Accordingly, the configuration of the electrode structure of an ion trap may be well-defined (e.g., precisely defined). This well-defined configuration is henceforth also referred to as the *"desired configuration"*, *"ideal shape"*, or the like. In general, the ideal shape may correspond to a field configuration assumed or even known to be (particularly) suitable for trapping ions. It is noted that the ideal shape of the electrode structure may even be defined exactly, for instance, if based on/obtained from a theoretical computation or simulation of the resulting field(s). In particular, the ideal shape may be predefined, e.g., determined before actually manufacturing individual components and/or assembling the trap.

For instance, it may be desired that the electrodes of an ion trap have particular shapes, in particular, that all electrodes have the same shape, as illustrated Figs. 1a, 1b, and Figs 2a to 2d. Furthermore, it may be desired that electrodes are aligned in a particular, e.g., symmetric, way with respect to each other. In other words, a spatial symmetry of the electrode structure may be desired.

In view thereof, according to an embodiment, a method for manufacturing an ion trap is provided. The method includes a step of assembling the ion trap by mounting electrodes of the ion trap to a mount of the ion trap. The method further includes a step of processing surfaces of the electrodes in the assembled ion trap.

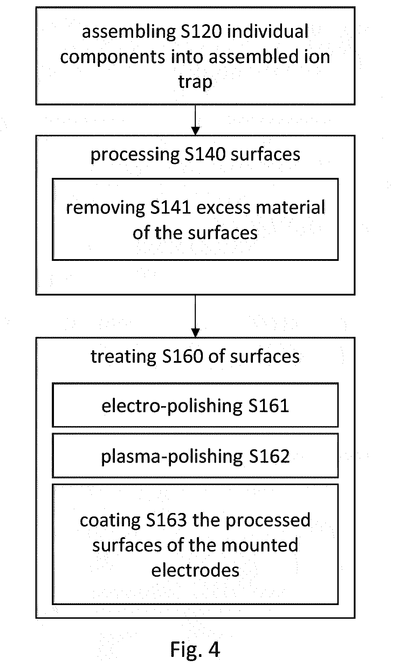

This is now further described with reference to **Fig. 4.**

In a first step **S120,** individual components of the ion trap may be assembled into an assembled ion trap. In general, an ion trap may be an assembly of individually produced components.

It is noted that the terms *"component'* or *"individual component'* are henceforth used interchangeably and refer to, e.g., electrodes, mount, and/or electrical contacts of an ion trap. In general, the individual components may be produced individually (e.g., separately) with respective tolerances (or error margins). It is further noted that the electrodes mount, and/or electrical contacts may be produced as one piece or, each electrode, each mount component, and/or each electrical contact may be produced individually/separately. For instance, each electrode may be produced individually and, thus, correspond to one of said individual components of the ion trap. However, the present invention is not limited thereto. The electrodes may for instance be produced in one piece and cut thereafter - before or after mounting them to the mount and/or before or after processing the surfaces of said electrodes-into individual electrodes.

Furthermore, it is noted that the terms *"assembled ion trap"* and *"assembled structure"* are used interchangeably and do not necessarily refer to the completely assembled ion trap. They rather refer to a state in which the positions of some of the components has been fixed with respect to each other. In particular, the said positions may be fixed to positions that correspond to their position in the final ion trap. In general, this may be done by mounting these components to a mount (e.g. the same mount). Thus, an ion trap may for instance be assembled S120 by mounting one or more electrodes 140, 240 to the mount 120, 220. In other words, in an assembled ion trap 100, 200, one or more (or even all) electrodes may be mounted to the mount.

It is further noted that, in some embodiments, the means for electrically connecting the mounted electrodes are used to mount/fix the electrodes to the mount.

This is illustrated in Fig. 2d, where the electrical contacts 260 have the form of long rods/bolts that may be inserted through the mount 220 partly into the electrodes 240. Using the electrical contacts to fix the electrodes to the mount, simplifies the structure of the ion trap, which, in turn, may facilitate the construction of said ion trap. However, the present invention is not limited thereto as, in other embodiments, the electrical contacts are not used for fixing the electrodes to the mount. In particular, in the assembled ion trap, the electrical contacts not necessarily extend into the electrodes.

In a second step S140, surfaces of the ion trap may be then processed. In this step, in particular *"important surfaces"* or *"functional surfaces"* may be processed. These terms refer to surface(s) that (substantially) determine the configuration (e.g., shape and/or symmetry) of the electrical and/or magnetic field generated by the ion trap. More specifically, the field(s) where the ions are to be trapped is/are substantially determined by the functional surfaces.

Functional surfaces are usually surfaces of components which are part of the functional electrode structure. For instance, functional surfaces may be surfaces of the electrodes. In particular, functional surfaces may be that surfaces of the electrodes that are near (or the closest to) the location where the ions are to be trapped. In other words, the functional surfaces of an electrode may be located on an end portion of the electrode that is on the opposite side relative to the part of the electrode mounted on the mount (e.g., in physical contact with the mount). In other words, functional surfaces are surfaces which determine or contribute substantially to the shape of the electric field.

For instance, the functional surfaces of ion trap 100 are highlighted bold/black in Fig. 1b, and the functional surfaces of ion trap 200 are highlighted bold/black in Fig. 2c and 2d. In particular, the functional surfaces 180 are surfaces of the electrodes 140a to 140d, and the functional surfaces 280 are surfaces of the electrodes 240.

Since field symmetry is frequently of crucial importance for the performance of the trap, functional surfaces of the electrode structure of ion traps may require very high mechanical symmetry to ensure the symmetry of the generated fields. Accordingly, the surfaces may be processed so as to increase a symmetry of an electrical field of the ion trap. However, the present invention is not limited thereto. In general, the surfaces may be processed so as to increase the performance of the trap. For instance, the surfaces may be corrected to be closer to the ideal shape.

In some embodiments, the processing S140 of the surfaces may include a step of removing S141 excess material of the surfaces. In particular, the excess material may be removed by electrical discharge machining of the surfaces.

Accordingly, the functional surfaces may be produced (intentionally) with some excess dimensions.

More specifically, when initially (e.g., before the mounting step S120) producing the individual electrodes), the functional surfaces may be produced with excess material, in particular, at the functional surfaces. Here, the terms *"excess material"* or *"excess dimensions"* refers to material of a surface that exceeds the material/dimensions of a corresponding surface of an electrode structure that has the desired final configuration.

It is noted that the processing of the surfaces in step 140 is performed on the assembled structure (e.g., after steps S120). In other words, during said processing, the positions of components, the surfaces of which are processed, is fixed with respect to each other. In particular, during the processing, said components may be mounted. For instance, the electrodes, the surfaces of which are processed, may be mounted during said processing.

Present approaches of ion trap manufacturing usually assemble the ion trap from individually manufactured components. However, when assembling an ion trap from these individual components, the manufacturing tolerances, i.e., the deviations of the individual components from a perfect shape, add up, which may reduce the performance of the (final) assembled ion trap. In particular, when assembling the ion trap from components, the tolerances of the functional surfaces of the components in relation to each other are subject to error propagation and error accumulation. Furthermore, the assembling of the ion trap may introduce additional errors as the components may not be mounted precisely at the correct position. In other words, the performance of an assembled ion trap may depend on the error accumulated from its individual components as well as from the assembling step.

For example, individually produced components typically deviate from the perfect electrode shape by about $10\mu m$. After mounting/assembling these components to the mount, the electrode structure typically has an accumulated deviation from the desired electrode structure of about $50\mu m$. Processing surfaces of the electrodes on the assembled structure may allow to reduce the deviations from the desired shape back to about $10\mu m$. Processing (functional) surfaces on the assembled ion trap, the problem of error accumulation caused by the assembly of individually produced components may be avoided or, at least, be reduced. More specifically, after processing (functional) surfaces on the assembled structure (in the manufacturing process/step S140), the tolerances of the functional surfaces in relation to each other may be subject to the tolerance of said processing, rather than to error propagation and error accumulation of the manufacturing of the individual components as well as the assembling.

Accordingly, said processing on the assembled structure may improve the accuracy and/or precision of the electrode structure of a mechanically manufactured ion trap. In particular, performing processing of the (functional) surfaces on the assembled structure may improve the mechanical symmetry of the surfaces of the electrode structure and, thereby, may improve the performance of the trap.

After processing the surfaces in step 140, in a third step S160, there may be a subsequent treatment S160 of the surfaces on the assembled structure. For instance, the processed surfaces of the mounted electrodes may be electro-polished S161, plasma-polished S162, and/or coated S163. Moreover, prior to coating, the surfaces of the electrodes may be etched in order to improve the adhesion of the coating.

After the processing of the functional surfaces in step S140, additional operations/treatments may be required as, for example, polishing and/or gold coating of the surfaces. However, it may turn out that disassembling and reassembling the trap after the processing step S140 compromises the mechanical symmetry of the electrode structure. In this case, subsequent operations, such as electro-polishing or plasma-polishing and coating, may be performed also on the assembled structure.

Summarizing the above, the present disclosure provides embodiments for manufacturing ion traps. More specifically, individual components of the ion trap are assembled into an assembled structure. For instance, electrodes of the ion trap may be mounted to a mount of the ion trap. Functional surfaces (e.g., electrodes) of the ion trap are then processed on the assembled structure.

## Claims

1. A method for manufacturing an ion trap (100; 200), the method including the steps of:

   assembling (S120) the ion trap (100; 200) by mounting electrodes (140a-140d; 240a-240d) of the ion trap (100; 200) to a mount (120; 220) of the ion trap (100; 200); and
   processing (S140) surfaces (180; 280) of the electrodes (140a-140d; 240a-240d) in the assembled ion trap (100; 200).

2. The method according to claim 1, wherein the processing (S140) of the surfaces (180; 280) includes a step of removing (S141) excess material of the surfaces (180; 280).

3. The method according to claim 1 or 2, wherein, in the processing (S140) of the surfaces (180; 280), the surfaces (180; 280) are processed (S140) so as to increase a symmetry of an electrical field of the ion trap (100; 200).

4. The method according to claim 2, wherein the removing (S141) of excess material includes a step of electrical discharge machining of the surfaces (180; 280).

**5.** The method according to any of claims 1 to 4, wherein
the ion trap (100; 200) is a Paul Trap, a three dimensional, 3D, ion trap, and/or a linear 3D trap.

**6.** The method according to any of claims 1 to 5, further comprising a step of:

electro-polishing (S161) the processed surfaces (180; 280) of the mounted electrodes (140a-140d; 240a-240d);
plasma-polishing (S162) the processed surfaces (180; 280) of the mounted electrodes (140a-140d; 240a-240d); and/or
coating (S163) the processed surfaces (180; 280) of the mounted electrodes (140a-140d; 240a-240d).

**7.** The method according to any of claims 1 to 6, wherein
the electrodes (140a-140d; 240a-240d) are made of titanium, copper, gold, stainless steel, and/or aluminum.

**8.** The method according to any of claims 1 to 7, wherein
a coefficient of thermal expansion of a material of the electrodes is substantially similar to a coefficient of thermal expansion of a material of the mount.

**9.** The method according to any of claims 1 to 7, wherein
the mount (120; 220) is made of an insulating material, such as sapphire, ceramics, aluminum-oxide, glass-ceramic, and/or diamond.

**10.** The method according to any of claims 1 to 8, wherein
the ion trap (100; 200) includes electrodes (140a-140d; 240a-240d) which, when connected to an alternating power source, generate an alternating multipole electrical field.

**11.** The method according to any of claims 1 to 9, wherein
the electrodes (140a-140d; 240a-240d) are mounted to an inner side of the mount (120; 220), and,
on an outer side of the mount (120; 220), there is, for each of the mounted electrodes (140a-140d; 240a-240d), a means (260) for electrically connecting the mounted electrode (140a-140d; 240a-240d) to a voltage.

**12.** The method according to any of claims 1 to 10, wherein,
the means (260) for electrically connecting the mounted electrodes (140a-140d; 240a-240d) are used to mount the electrodes (140a-140d; 240a-240d) to the mount (120; 220).

Ion Trap 100

Fig. 1a

Fig. 1b

Ion Trap 200

Fig. 2a

Fig. 2b

Ion Trap 200

Fig. 2c

Fig. 2d

quadrupole field

field lines

Fig. 3

assembling S120 individual components into assembled ion trap

↓

processing S140 surfaces

removing S141 excess material of the surfaces

↓

treating S160 of surfaces

electro-polishing S161

plasma-polishing S162

coating S163 the processed surfaces of the mounted electrodes

Fig. 4

Europäisches
Patentamt

European
Patent Office

Office européen
des brevets

# EUROPEAN SEARCH REPORT

Application Number

EP 20 20 3608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/016700 A1 (EGLEY BERT DAVID [US] ET AL) 27 January 2011 (2011-01-27) * paragraph [0044] - paragraph [0051] * * paragraph [0061] * * figures 5-7 * | 1-12 | INV. H01J49/42 ADD. B23H9/00 |
| X | US 2011/253678 A1 (DUFFIN JASON [GB] ET AL) 20 October 2011 (2011-10-20) * paragraph [0001] - paragraph [0002] * * paragraph [0021] * * paragraph [0034] - paragraph [0035] * * figure 1 * | 1-12 | |
| X | US 2007/114391 A1 (MORDEHAI ALEXANDER [US] ET AL) 24 May 2007 (2007-05-24) * paragraph [0034] - paragraph [0035] * * paragraph [0039] * * paragraph [0044] - paragraph [0045] * * figure 4C * | 1-12 | |
| A | US 5 384 461 A (JULLIEN JOSEPH P R [GB] ET AL) 24 January 1995 (1995-01-24) * column 6, line 44 - line 53 * * the whole document * | 1-12 | TECHNICAL FIELDS SEARCHED (IPC) H01J B23H |
| A | US 7 351 963 B2 (BRUKER DALTONIK GMBH [DE]) 1 April 2008 (2008-04-01) * the whole document * | 1-12 | |
| A | US 5 852 270 A (HOLKEBOER DAVID H [US]) 22 December 1998 (1998-12-22) * the whole document * | 1-12 | |

The present search report has been drawn up for all claims

| Place of search | Date of completion of the search | Examiner |
|---|---|---|
| The Hague | 16 March 2021 | Cornelussen, Ronald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 989 262 A1**

## ANNEX TO THE EUROPEAN SEARCH REPORT
## ON EUROPEAN PATENT APPLICATION NO.

EP 20 20 3608

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2021

| Patent document cited in search report | | Publication date | Patent family member(s) | | Publication date |
|---|---|---|---|---|---|
| US 2011016700 | A1 | 27-01-2011 | CN 102473580 A | | 23-05-2012 |
| | | | DE 112010002730 T5 | | 16-08-2012 |
| | | | US 2011016700 A1 | | 27-01-2011 |
| | | | WO 2011011742 A1 | | 27-01-2011 |
| US 2011253678 | A1 | 20-10-2011 | EP 2332165 A1 | | 15-06-2011 |
| | | | US 2011253678 A1 | | 20-10-2011 |
| | | | WO 2010026424 A1 | | 11-03-2010 |
| US 2007114391 | A1 | 24-05-2007 | NONE | | |
| US 5384461 | A | 24-01-1995 | DE 69207183 T2 | | 15-05-1996 |
| | | | EP 0583329 A1 | | 23-02-1994 |
| | | | JP H06507270 A | | 11-08-1994 |
| | | | US 5384461 A | | 24-01-1995 |
| | | | WO 9221141 A1 | | 26-11-1992 |
| US 7351963 | B2 | 01-04-2008 | DE 102004037511 A1 | | 16-03-2006 |
| | | | GB 2416915 A | | 08-02-2006 |
| | | | US 2006027745 A1 | | 09-02-2006 |
| US 5852270 | A | 22-12-1998 | NONE | | |

EPO FORM P0459

For more details about this annex : see Official Journal of the European Patent Office, No. 12/82